(19) Europäisches Patentamt
European Patent Office
Office européen des brevets

(11) Veröffentlichungsnummer: **0 324 950 B1**

(12) # EUROPÄISCHE PATENTSCHRIFT

(45) Veröffentlichungstag der Patentschrift: **04.03.92**

(51) Int. Cl.[5]: **C09D 163/10**, C09D 5/44

(21) Anmeldenummer: **88120995.1**

(22) Anmeldetag: **15.12.88**

Verbunden mit 89900242.2/0386132
(europäische
Anmeldenummer/Veröffentlichungsnummer)
durch Entscheidung vom 24.04.91.

(54) **Verfahren zur Beschichtung elektrisch leitfähiger Substrate, nach diesem Verfahren beschichtete Substrate und wässrige Elektrotauchlackbäder.**

(30) Priorität: **22.01.88 DE 3801786**

(43) Veröffentlichungstag der Anmeldung:
**26.07.89 Patentblatt 89/30**

(45) Bekanntmachung des Hinweises auf die Patenterteilung:
**04.03.92 Patentblatt 92/10**

(84) Benannte Vertragsstaaten:
**AT BE CH DE ES FR GB IT LI NL SE**

(56) Entgegenhaltungen:
**EP-A- 0 070 550**
**EP-A- 0 200 397**
**WO-A-86/07083**
**DE-A- 3 518 770**

(73) Patentinhaber: **BASF Lacke + Farben Aktiengesellschaft**
**Max-Winkelmann-Strasse 80**
**W-4400 Münster(DE)**

(72) Erfinder: **Ott, Günther, Dr.**
**Von-Holte-Strasse 101 a**
**W-4400 Münster(DE)**
Erfinder: **Reiter, Udo, Dr.**
**Regerstrasse 22**
**W-4404 Telgte(DE)**
Erfinder: **Jouck, Walter, Dr.**
**Grüner Weg 7**
**W-4400 Münster(DE)**
Erfinder: **Santure, David J., Dr.**
**Hummelbrink 13**
**W-4400 Münster(DE)**
Erfinder: **Rühl, Dieter, Dr.**
**Hittorfstrasse 57**
**W-4400 Münster(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Beschichtung elektrisch leitfähiger Substrate, bei dem

(1) das Substrat in ein wäßriges Elektrotauchlackbad eingetaucht wird, wobei das wäßrige Elektrotauchlackbad ein kationisches aminmodifiziertes Epoxidharz enthält, das erhältlich ist durch Umsetzung von

(A) einer Diepoxidverbindung mit einem Epoxidäquivalentgewicht unter 2000

(B) einer gegenüber Epoxidgruppen monofunktionell reagierenden Verbindung, die eine alkoholische OH-Gruppe, eine phenolische OH-Gruppe oder eine SH-Gruppe trägt und

(C) einem Amin,

wobei die Komponenten (A) und (B) in einem Molverhältnis von 10:1 bis 1:1, vorzugsweise 4:1 bis 1,5:1, eingesetzt werden und die positiven Ladungen durch Protonierung des Reaktionsprodukts und/oder Verwendung von Aminsalzen als (C)-Komponente eingeführt werden.

(2) das Substrat als Kathode geschaltet wird,

(3) durch Gleichstrom ein Film auf dem Substrat abgeschieden wird,

(4) das Substrat aus dem Elektrotauchlackbad entfernt wird und

(5) der abgeschiedene Lackfilm eingebrannt wird.

Die Erfindung betrifft auch nach dem erfindungsgemäßen Verfahren beschichtete Substrate und die in dem erfindungsgemäßen Verfahren eingesetzten Elektrotauchlackbäder.

Die oben beschriebene kathodische Elektrotauchlackierung ist ein vor allem zum Grundieren häufig angewandtes Lackierverfahren und wird insbesondere zur Grundierung von Automobilkarossen eingesetzt.

Aus den deutschen Offenlegungsschriften DE-OS-35 18 732, DE-OS-34 09 188 und DE-OS-35 18 770 ist ein Verfahren gemäß dem Oberbegriff des Patentanspruchs 1 bekannt.

Bei den in den deutschen Offenlegungsschriften DE-OS-34 09 188, DE-OS-35 18 732 und DE-OS-35 18 770 beschriebenen Verfahren treten nachteiligerweise im eingebrannten Lackfilm dem Fachmann gut bekannte Oberflächenstörungen (insbesondere Krater) auf.

Die der vorliegenden Erfindung zugrundeliegende Aufgabe besteht in der Bereitstellung eines neuen Verfahrens gemäß Oberbegriff des Patentanspruchs 1, mit dem Lackfilme hergestellt werden können, die im Vergleich zu den Lackfilmen des Standes der Technik weniger und/oder schwächer ausgeprägte Oberflächenstörungen aufweisen und in überlackierten Lackschichten keine auf Haftungsstörungen zurückzuführende Schäden verursachen.

Diese Aufgabe wird erfindungsgemäß durch ein Verfahren gemäß Oberbegriff des Patentanspruchs 1 gelöst, das dadurch gekennzeichnet ist, daß das Elektrotauchlackbad mindestens 7,5 Gew.-% eines Polyoxyalkylenpolyamins oder eines Gemisches aus mehreren Polyoxyalkylenpolyaminen mit unterschiedlichen chemischen Strukturen enthält, wobei sich die Gew.-%-Angabe auf die im Elektrotauchlackbad enthaltene Gesamtmenge an Bindemitteln bezieht.

Die durch die Erfindung erreichten Vorteile sind im wesentlichen darin zu sehen, daß mit dem erfindungsgemäßen Verfahren Lackfilme erhalten werden können, die im Vergleich zu den Lackfilmen des Standes der Technik weniger und/oder schwächer ausgeprägte Oberflächenstörungen aufweisen und in überlackierten Lackschichten - insbesondere in überlackierten Lackschichten, die Alkydharze als Bindemittel enthalten, - keine auf Haftungsstörungen zurückzuführende Schäden verursachen.

Weitere wichtige, mit dem erfindungsgemäßen Verfahren erreichte Vorteile bestehen darin, daß die mit dem erfindungsgemäßen Verfahren erhaltenen Lackfilme im Vergleich zum Stand der Technik höhere Schichtdicken und höhere Elastizitäten aufweisen.

In der US-PS-3,975,250 werden in Elektrotauchlackbädern einsetzbare kationische reaktive Weichmacher offenbart, die durch Umsetzung von teilverkappten Polyisocyanaten mit Polyoxypropylendiaminen hergestellt werden. Ein vor der der vorliegenden Erfindung zugrundeliegenden Aufgabenstellung stehender Durchschnittsfachmann kann der US-PS-3,975,250 aber keinerlei Hinweise zur Lösung der Aufgabenstellung entnehmen.

In der US-PS-4,423,166 wird ein Elektrotauchlackierverfahren offenbart, das dadurch gekennzeichnet ist, daß das Elektrotauchlackbad ein Addukt aus einem Polyoxyalkylenpolyamin und einem Polyepoxid als Antikratermittel enthält. Bei dem in der US-PS-4,423,166 offenbarten Verfahren werden aber keine Elektrotauchlackbäder gemäß Oberbegriff des Patentanspruchs 1 eingesetzt.

Setzt man die in der US-PS-4,423,166 offenbarten Antikratermittel dennoch in einem Verfahren gemäß Oberbegriff des Patentanspruchs 1 ein, dann wird zwar die Neigung zur Bildung von Oberflächenstörungen herabgesetzt, dafür treten aber auf Haftungsstörungen zurückzuführende Probleme in überlackierten Lackschichten auf. Besonders große Probleme treten in überlackierten Lackschichten, die Alkydharze als Bindemittel enthalten, auf.

Die mit der vorliegenden Erfindung erreichten Vorteile sind um so überraschender, als in der US-PS-4,423,166 in Spalte 18 Elektrotauchlackbäder beschrieben werden, die bezogen auf die im Elektrotauchlackbad enthaltene Gesamtmenge an Bindemitteln bis zu 7,0 Gew.-% eines Polyoxyalkylenpolyamins enthalten, aber Lackfilme mit erheblichen Oberflächenstörungen liefern (vgl. table I in der US-PS-4,423,166).

Elektrotauchlackbäder für die kathodische Elektrotauchlackierung werden vorzugsweise hergestellt, indem zunächst einmal eine wäßrige Dispersion hergestellt wird, die ein kationisches Harz, ggf. ein Vernetzungsmittel und sonstige übliche Zusätze, wie z.B. Entschäumer usw. enthält.

In diese wäßrige Dispersion wird dann eine Pigmentpaste eingearbeitet.

Die Pigmentpaste besteht aus einem Reibharz und Pigmenten und/oder Füllstoffen. Die Pigmentpaste kann außerdem noch weitere Zusätze, wie z.B. Weichmacher, Netzmittel, Antioxidantien usw. enthalten.

Als Beispiele für Pigmente bzw. Füllstoffe, die in der Pigmentpaste enthalten sein können, werden genannt: Titandioxid, Antimonoxid, Zinkoxid, basisches Bleicarbonat, basisches Bleisulfat, Bariumcarbonat, Porzellan, Ton, Kalciumcarbonat, Aluminiumsilicat, Siliciumdioxid, Magnesiumcarbonat, Magnesiumsilikat, Cadmiumgelb, Cadmiumrot, Ruß, Phthalocyaninblau, Chromgelb, Toluidylrot und hydratisiertes Eisenoxid.

Die Herstellung von Pigmentpasten ist allgemein bekannt und braucht hier nicht näher erläutert werden (vgl. z.B. D.H. Parker, Principles of Surface Coating Technology, Intersience Publishers, New York (1965); R.L. Yates, Electropainting, Robert Draper Ltd., Teddington/England (1966); H.F. Payne, Organic Coating Technology, Band 2, Wiley and Sons, New York (1961).

Die Pigmentpaste wird in einer solchen Menge zur obenbeschriebenen wäßrigen Dispersion gegeben, daß das fertige Elektrotauchlackbad die für die Abscheidung erforderlichen Eigenschaften aufweist. In dem meisten Fällen beträgt das Gewichtsverhältnis zwischen Pigment bzw. Füllstoff und der im Elektrotauchlackbad enthaltenen Gesamtmenge an kationischem Harz 0,05 bis 0,5.

Nach der Vereinigung der wäßrigen Dispersion mit der Pigmentpaste und Einstellung eines geeigneten Feststoffgehaltes wird ein gebrauchsfertiges Elektrotauchlackbad erhalten.

Die erfindungsgemäß eingesetzten Elektrotauchlackbäder enthalten ein kationisches aminmodifiziertes Epoxidharz, das erhältlich ist durch Umsetzung von

(A) einer Diepoxidverbindung mit einem Epoxidäquivalentgewicht unter 2000

(B) einer gegenüber Epoxidgruppen monofunktionell reagierenden Verbindung, die eine alkoholische OH-Gruppe, eine phenolische OH-Gruppe oder eine SH-Gruppe trägt und

(C) einem Amin,

wobei die Komponenten (A) und (B) in einem Molverhältnis von 10:1 bis 1:1, vorzugsweise 4:1 bis 1,5:1, eingesetzt werden und die positiven Ladungen durch Protonierung des Reaktionsprodukts und/oder Verwendung von Aminsalzen als (C) Komponente eingeführt werden.

Kationische aminmodifizierte Epoxidharze des oben beschriebenen Typs werden in den deutschen Offenlegungsschriften DE-OS-34 09 188, DE-OS-35 18 732 und DE-OS-35 18 770 offenbart.

Als Komponente (A) können im Prinzip alle Verbindungen eingesetzt werden, die zwei reaktive Epoxidgruppen enthalten und ein Epoxidäquivalentgewicht aufweisen, das unter 2000, vorzugsweise unter 1000, besonders bevorzugt unter 500 liegt.

Als Beispiele für Diepoxidverbindungen, die als Komponente (A) eingesetzt werden können, werden Diglycidylether von Polyphenolen, Diglycidylether von Dialkoholen und Diglycidylester von Dicarbonsäuren genannt.

Ganz besonders bevorzugt werden Diglycidylether von Polyphenolen, insbesondere Diglycidylether von Bisphenol A, als Komponente (A) eingesetzt. Diglycidylether von Polyphenolen können durch Umsetzung von Epihalohydrinen mit Polyphenolen erhalten werden.

Es können selbstverständlich auch Gemische unterschiedlicher Diepoxidverbindungen als Komponente (A) eingesetzt werden.

Als Komponente (B) können im Prinzip alle gegenüber Epoxidgruppen monofunktionell reagierenden Verbindungen, die eine gegenüber Epoxidgruppen reaktive alkoholische OH-Gruppe, eine gegenüber Epoxidgruppen reaktive phenolische OH-Gruppe oder eine gegenüber Epoxidgruppen reaktive SH-Gruppe im Molekül enthalten, eingesetzt werden.

Ganz besonders bevorzugt werden Verbindungen, die eine gegenüber Epoxidgruppen reaktive phenolische OH-Gruppe im Molekül enthalten, insbesondere Alkylphenole, als Komponente (B) eingesetzt.

Es können selbstverständlich auch Gemische aus unterschiedlichen, gegenüber Epoxidgruppen monofunktionell reagierenden Verbindungen eingesetzt werden.

Als Komponente (C) können primäre oder sekundäre Amine bzw. deren Salze, Salze von tertiären Aminen oder Gemische aus diesen Verbindungen eingesetzt werden.

Vorzugsweise werden wasserlösliche Amine als (C)-Komponente eingesetzt. Als Beispiele für einsetzbare Amine werden Mono- und Dialkylamine, wie Methylamin, Ethylamin, Propylamin, Butylamin, Dimethylamin, Diethylamin, Dipropylamin, Methylbutylamin usw. genannt. Es können auch Alkanolamine, wie z.B.

Methylethanolamin und Diethanolamin als (C)-Komponenten eingesetzt werden. Auch Ketimine von Polyaminen mit primären und sekundären Aminogruppen können als (C)-Komponente eingesetzt werden. Ferner sind auch Dialkylaminoalkylamine, wie zum Beispiel Dimethylaminoethylamin, Diethylaminopropylamin und Dimethylaminopropylamin als (C)-Komponente brauchbar.

In den meisten Fällen werden niedermolekulare Amine als (C)-Komponenten verwendet. Es ist jedoch auch möglich, höhermolekulare Monoamine einzusetzen.

In vielen Fällen werden als Komponente (C) mehrere unterschiedliche Amine eingesetzt.

Das in Rede stehende kationische aminmodifizierte Epoxidharz ist herstellbar, indem in einer ersten Stufe aus den Komponenten (A) und (B) ein epoxidgruppenhaltiges Zwischenprodukt mit einem Molekulargewicht von 400 bis 5000 hergestellt wird. Diese Umsetzung wird vorzugsweise in einem inerten organischen Lösemittel bei Reaktionstemperaturen von 100° bis 190°C in Anwesenheit von geeigneten Katalysatoren (z.B. tertiären Aminen) durchgeführt und über Epoxidäquivalentgewichtsbestimmungen kontrolliert.

Die Epoxidgruppen des so erhaltenen Zwischenprodukts werden anschließend zumindest teilweise mit der Komponente (C) umgesetzt. Auch diese Umsetzung wird in den Fällen, in denen keine Aminsalze als (C)-Komponente eingesetzt werden, vorzugsweise in einem organischen Lösemittel durchgeführt. Die Reaktion zwischen Aminen und epoxidgruppenhaltigen Verbindungen springt häufig schon beim Vermischen der Reaktionspartner an. Je nach gewünschtem Reaktionsverlauf - vor allem zur Vervollständigung der Umsetzung - ist es empfehlenswert, die Reaktionstemperatur auf 50 bis 150°C zu erhöhen.

Wenn als (C)-Komponente Aminsalze eingesetzt werden, dann wird die entsprechende Umsetzung vorzugsweise in einem wasserhaltigen Reaktionsmedium durchgeführt.

Oft ist es wünschenswert, das Bindemittel noch weiter chemisch zu modifizieren. Dazu wird wenigstens ein Teil der reaktionsfähigen Gruppen des aus den Komponenten (A) und (B) erhaltenen Zwischenprodukts oder des aus den Komponenten (A), (B) und (C) erhaltenen Reaktionsproduktes mit modifizierenden Verbindungen umgesetzt.

Als Beispiele für modifizierende Verbindungen werden genannt:

a) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Ester oder

b) aminogruppenhaltige Verbindungen, wie Diethylamin oder Ethylhexylamin oder Diamine mit sekundären Aminogruppen, z.B. N,N′-Dialkylalkylendiamine, wie Dimethylethylendiamin, N,N′-Dialkyl-polyoxialkylenamine, wie N,N′-dimethylpolyoxipropylendiamin, cyanalkylierte Alkylendiamine, wie Bis-N,N′-Cyanethyl-ethylendiamin, cyanalkylierte Polyoxialkylenamine, wie Bis-N,N′-Cyanethylpolyoxipropylendiamin, Polyaminoamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren oder das Umsetzungsprodukt von einem Mol Diaminohexan mit zwei Molen Monoglycidylether oder Monoglycidylester, speziell Glycidylester $\alpha$-verzweigter Fettsäuren, wie der Versaticsäure oder

c) hydroxylgruppenhaltige Verbindungen, wie Neopentylglykol, Bis-ethoxiliertes Neopentylglykol, Hydroxipivalinsäureneopentylglykolester, Dimethylhydantoin-N,N′-diethanol, Hexandiol-1,6, Hexandiol-2,5, 1,4-Bis-(hydroximethyl)-cyclohexan, 1,1-Isopropyliden-bis-(p-phenoxi)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethancyclohexanonketimin sowie auch Polyglykolether, Polyesterpolyole, Polyetherpolyole, Polycaprolactonpolyole, Polycaprolactampolyole verschiedener Funktionalität und Molekulargewichte oder

d) gesättigte oder ungesättigte Fettsäuremethylester, die in Gegenwart von Natriummethylat mit Hydroxylgruppen der Epoxidharze umgeestert werden.

Die für die Wasserverdünnbarkeit und elektrische Abscheidbarkeit erforderlichen positiven Ladungen können durch Protonierung mit wasserlöslichen Säuren (z.B. Borsäure, Ameisensäure, Milchsäure, vorzugsweise Essigsäure) und/oder durch die Verwendung von Aminsalzen als (C)-Komponenten in die Bindemittelmoleküle eingeführt werden.

Die erfindungsgemäß eingesetzten kationischen aminmodifizierten Epoxidharze sind im wesentlichen epoxidgruppenfrei, d.h. ihr Epoxidgruppengehalt ist so niedrig, daß weder vor noch nach der Abscheidung des Lackfilmes Vernetzungsreaktionen über Epoxidgruppen ablaufen können. Die erfindungsgemäß eingesetzten kationischen aminmodifizierten Epoxidharze enthalten vorzugsweise keinerlei freie Epoxidgruppen.

Das in den erfindungsgemäß eingesetzten Elektrotauchlackbädern eingesetzte kationische aminmodifizierte Epoxidharz kann durch chemische Modifikation in ein selbstvernetzendes kationisches Harz überführt

werden.
Ein selbstvernetzendes kationisches Harz kann zum Beispiel erhalten werden, indem das kationische aminmodifizierte Epoxidharz bzw. ein Vorprodukt des kationischen aminmodifizierten Epoxidharzes mit einem teilblockierten Polyisocyanat, das im Mittel eine freie Isocyanatgruppe pro Molekül enthält, umgesetzt wird.
In dem erfindungsgemäßen Verfahren werden jedoch bevorzugt Elektrotauchlackbäder eingesetzt, die das in Rede stehende kationsiche aminmodifizierte Epoxidharz als fremdvernetzendes kationisches Harz in Kombination mit einem geeigneten Vernetzungsmittel enthalten.

Beispiele für geeignete Vernetzungsmittel sind Phenoplaste, polyfunktionelle Mannichbasen, Melaminharze, Benzoguanaminharze, blockierte Polyisocyanate und Verbindungen, die mindestens zwei Gruppierungen der allgemeinen Formel $R^1$-O-CO- enthalten.

Der Rest $R^1$ bedeutet:

$R^1$ = $R^2$-O-CO-$CH_2$-, $R^3$-CHOH-$CH_2$-, $R^4$-CHOR$^5$-CHOH-$CH_2$-
$R^2$ = Alkyl
$R^3$ = H, Alkyl, $R^6$-O-$CH_2$- oder $R^6$-CO-O-$CH_2$-
$R^4$ = H oder Alkyl
$R^5$ = H, Alkyl oder Aryl
$R^6$ = Alkyl, Cycloalkyl oder Aryl

Beispiele für Verbindungen, die mindestens zwei Gruppierungen der allgemeinen Formel $R^1$-O-CO-enthalten, sind Bis-(carbalkoxymethyl)azelat, Bis-(carbalkoxymethyl) sebacat, Bis-(carbalkoxymethyl)adipat, Bis-(carbalkoxymethyl)decanat, Bis-(carbalkoxymethyl)terephthalat, Bis-(2-hydroxybutyl)-acelat und Bis-(2-hydroxyethyl) terephthalat.

In dem erfindungsgemäßen Verfahren werden besonders bevorzugt Elektrotauchlackbäder eingesetzt, die das in Rede stehende kationsiche aminmodifizierte Epoxidharz als fremdvernetzendes kationisches Harz in Kombination mit einem blockierten Polyisocyanat als Vernetzungsmittel enthalten.

Als blockierte Polyisocyanate können beliebige Polyisocyanate benutzt werden, bei denen die Isocyanatgruppen mit einer Verbindung umgesetzt worden sind, so daß das gebildete blockierte Polyisocyanat gegenüber Hydroxyl-und Aminogruppen bei Raumtemperatur beständig ist, bei erhöhten Temperaturen, in der Regel im Bereich von etwa 90 °C bis etwa 300 °C, aber reagiert. Bei der Herstellung der blockierten Polyisocyanate können beliebige für die Vernetzung geeignete organische Polyisocyanate verwendet werden. Bevorzugt sind die Isocyanate, die etwas 3 bis 36, insbesondere etwa 8 bis etwa 15 Kohlenstoffatome enthalten. Beispiele geeigneter Diisocyanate sind Hexamethylendiisocyant, 2,4-Toluylendiisocyanat, 2,6-Toluylendiisocyanat und 1-Isocyanatomethyl-5-isocyanato-1,3,3-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol, cycloaliphatische Alkohole, wie Cyclopentanol und Cyclohexanol, aromatische Alkylalkohole, wie Phenylcarbinol und Methylphenylcarbinol.

Andere geeignete Blockierungsmittel sind Hydroxylamine, wie Ethanolamin, Oxime, wie Methylethylketonoxim, Acetonoxim und Cyclohexanonoxim oder Amine, wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Das Vernetzungsmittel wird in der Regel in einer Menge von 5 bis 60 Gew.-%, bevorzugt 20 bis 40 Gew.-%, bezogen auf die im Elektrotauchlack enthaltene Gesamtmenge an vernetzbarem kationischen Harz, eingesetzt.

Der Anteil des im Oberbegriff des Patentanspruchs 1 beschriebenen kationischen aminmodifizierten Epoxidharzes an der im Elektrotauchlackbad enthaltenen Gesamtmenge an Bindemitteln beträgt in den Fällen, in denen das kationische aminmodifizierte Epoxidharz als fremdvernetzendes Harz vorliegt, vorzugsweise 90 bis 40, besonders bevorzugt 75 bis 60 Gew.-%, und in den Fällen, in denen das kationische aminmodifizierte Epoxidharz als selbstvernetzendes Harz vorliegt, beträgt der Anteil vorzugsweise 100 bis 70 Gew.-%.

Es ist erfindungswesentlich, daß bei dem erfindungsgemäßen Verfahren Elektrotauchlackbäder eingesetzt werden, die mindestens 7,5 Gew.-% eines Polyoxyalkylenpolyamins enthalten, wobei sich die Gew.-

%-Angabe auf die im Elektrotauchlackbad enthaltene Gesamtmenge an Bindemitteln bezieht.

Unter Polyoxyalkylenpolyaminen werden Verbindungen verstanden, die sowohl Oxyalkylengruppen als auch mindestens zwei Aminogruppen, vorzugsweise mindestens zwei primäre Aminogruppen, enthalten. Die Polyoxyalkylenpolyamine sollten ein zahlenmittleres Molekulargewicht von etwa 137 bis 3600, vorzugsweise 400 bis 3000, besonders bevorzugt 800 bis 2500, aufweisen. Außerdem sollten die Polyoxyalkylenpolyamine ein Aminäquivalentgewicht von etwa 69 bis etwa 1800, vorzugsweise 200 bis 1500, besonders bevorzugt 400 bis 1250 aufweisen.

Bevorzugt eingesetzte Polyoxyalkylenpolyamine weisen eine chemische Struktur gemäß der allgemeinen Formel (I) auf

$$H_2N-CHR-CH_2-O-(-CHR-CH_2-O-)_n-CH_2-CHR-NH_2$$

n

(I)

wobei bedeuten

R = H oder Alkylrest mit 1 bis 6 C-Atomen, vorzugsweise $-CH_3$

n = 5 - 60, vorzugsweise 20-40

Polyoxyalkylenpolyamine, die eine chemische Struktur gemäß der allgemeinen Formel (I) aufweisen, werden in der US-PS-3,236,895 in Spalte 2, Zeilen 40-72, offenbart. Verfahren zur Herstellung dieser Polyoxyalkylenpolyamine werden in den in den Spalten 4 bis 9 der US-PS-3,236,895 zu findenden Patentbeispielen 4, 5, 6 und 8 bis 12 offenbart.

Es können auch Polyoxyalkylenpolyamine eingesetzt werden, die unterschiedliche Oxyalkylengruppen enthalten, beispielsweise Polyoxyalkylenpolyamine, die eine chemische Struktur gemäß der allgemeinen Formel (II) aufweisen:

$$H_2N-CH(CH_3)-CH_2-(O-CH(CH_3)-CH_2)_n-(O-CH_2-CH_2-)_m-O-CH_2-CH(CH_3)-NH_2 \quad (II)$$

worin bedeuten

n + m = 5 bis 60, vorzugsweise 20 bis 40

m = 1 bis 59, vorzugsweise 5 bis 30

n = 1 bis 59, vorzugsweise 5 bis 30

Es können auch Polyoxyalkylenpolyaminderivate eingesetzt werden, die durch Umsetzung der in der US-PS-3,236,895 in Spalte 2, Zeilen 40-72 beschriebenen Polyoxyalkylenpolyamine mit Acrylnitril und nachfolgender Hydrierung des Reaktionsproduktes erhältlich sind.
Diese Derivate haben eine chemische Struktur gemäß der allgemeinen Strukturformel (III):

$$H_2N-(-CH_2-)_3-NH-CHR-CH_2-O-(-CHR-CH_2-O-)_n-CH_2-CHR-NH-(-CH_2-)_3-NH_2 \quad (III)$$

worin bedeuten

R = H oder ein Alkylrest mit 1 bis 6 Kohlenstoffatomen, vorzugsweise $-CH_3$

n = 5 bis 60, vorzugsweise 20 bis 40

Es ist selbstverständlich, daß die erfindungsgemäß eingesetzten Elektrotauchlackbäder auch ein Gemisch aus mehreren Polyoxyalkylenpolyaminen mit unterschiedlichen chemischen Strukturen enthalten können.

Die Polyoxyalkylenpolyamine bzw. Polyoxyalkylenpolyamingemische können zu jedem Zeitpunkt der Herstellung und auch nach Fertigstellung der Elektrotauchlackbäder in die Elektrotauchlackbäder eingearbeitet werden. Die Polyoxyalkylenpolyamine bzw. Polyoxyalkylenpolyamingemische werden vorzugsweise zur wäßrigen Dispersion bzw. zu einer Vorstufe der wäßrigen Dispersion, die das im Oberbegriff des Patentanspruchs 1 beschriebene kationische aminmodifizierte Epoxidharz, ggf. Vernetzungsmittel und sonstige übliche Zusätze enthält (vgl. S. 5, Zeilen 5 bis 10), oder zur Pigmentpaste bzw. zu einer Vorstufe der Pigmentpaste (vgl. S. 5, Zeilen 15 ff.) zugegeben. Die Polyoxyalkylenpolyaminmoleküle werden aller Wahrscheinlichkeit nach von der in der wäßrigen Dispersion bzw. Pigmentpaste enthaltenen Säure protoniert.

Es ist aber auch möglich, das entsprechende Polyoxyalkylenpolyamin bzw. Polyoxyalkylenpolyamingemisch in protonierter Form zu der in Rede stehenden wäßrigen Dispersion bzw. zu einer Vorstufe dieser Dispersion oder zur Pigmentpaste bzw. einer Vorstufe der Pigmentpaste zuzugeben. Das protonierte Polyoxyalkylenpolyamin bzw. Polyoxyalkylenpolyamingemisch kann durch einfache Zugabe einer Brönstedsäure zu dem entsprechenden Polyoxyalkylenpolyamin bzw. Polyoxyalkylenpolyamingemisch erhalten werden. Die im fertigen Elektrotauchlackbad enthaltene Gesamtmenge an Brönstedsäure ist so zu wählen, daß der pH-Wert des Elektrotauchlackbades zwischen 4 und 8, vorzugsweise zwischen 5 und 7,5 liegt.

Es ist erfindungswesentlich, daß die in den erfindungsgemäß eingesetzten Elektrotauchlackbädern enthaltene Menge an Polyoxyalkylenpolyamin bzw. Polyoxyalkylenpolyamingemisch mindestens 7,5 Gew.-% beträgt, wobei sich die Gew.-%-Angabe auf die im Elektrotauchlackbad enthaltene Gesamtmenge an Bindemitteln bezieht. Mit anderen Worten ausgedrückt bedeutet das, daß die erfindungsgemäß eingesetzten Elektrotauchlackbäder auf 100 Gewichtsteile Bindemittel mindesten 7,5 Gew.-Teile Polyoxyalkylenpolyamin oder Polyoxyalkylenpolyamingemisch enthalten müssen. Bei Verwendung von Elektrotauchlackbädern mit einem niedrigeren Gehalt an Polyoxyalkylenpolyamin bzw. Polyoxyalkylenpolyamingemisch werden Lackfilme mit erheblich mehr und/oder erheblich stärker ausgeprägten Oberflächenstörungen erhalten als bei Verwendung der erfindungsgemäßen Elektrotauchlackbäder.

Die Obergrenze der in den erfindungsgemäß eingesetzten Elektrotauchlackbädern enthaltenen Menge an Polyoxyalkylenpolyamin bzw. Polyoxyalkylenpolyamingemisch wird durch die weichmachende Wirkung des zugesetzten Polyoxyalkylenpolyamins bzw. Polyoxyalkylenpolyamingemisches bestimmt und liegt im allgemeinen bei 20 bis 40 Gew.-%, wobei sich die Gew.-%-Angabe auf die im Elektrotauchlackbad enthaltene Gesamtmenge an Bindemitteln bezieht.

Die erfindungsgemäß eingesetzten Elektrotauchlackbäder enthalten vorzugsweise 8 bis 18, besonders bevorzugt 10 bis 15 Gew.-% Polyoxyalkylenpolyamin bzw. Polyoxyalkylenpolyamingemisch, wobei die Gewichtsprozentangaben auf die im Elektrotauchlackbad enthaltene Gesamtmenge an Bindemitteln bezogen sind.

Die im Elektrotauchlackbad enthaltene Gesamtmenge an Bindemitteln wird ermittelt, indem die im Elektrotauchlackbad enthaltene Menge an kationischem aminmodifizierten Epoxidharz der im Oberbegriff des Patentanspruchs 1 beschriebenen Art, die ggf. im Elektrotauchlackbad enthaltene Menge an Vernetzungsmitteln, die im Elektrotauchlackbad enthaltene Menge an Reibharz und die im Elektrotauchlackbad ggf. außerdem noch vorhandene Menge an unter den Einbrennbedingungen vernetzenden Harzen addiert werden.

Der Festkörper der erfindungsgemäß eingesetzten Elektrotauchlackbäder beträgt vorzugsweise 7 bis 35 Gew.-Teile, besonders bevorzugt 12 bis 25 Gew.-Teile.

Das Elektrotauchlackbad wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die Temperatur des Elektrotauchlackbades soll zwischen 15 bis 35 °C, bevorzugt zwischen 20 bis 30 °C liegen.

Die angelegte Spannung kann in einem großen Bereich schwanken und kann z.B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/$m^2$. Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200 °C über eine Zeitdauer von 10 bis 60 Minuten, vorzugsweise bei 150 bis 180 °C über eine Zeitdauer von 15 bis 30 Minuten, eingebrannt.

Das erfindungsgemäße Verfahren kann zum Beschichten von beliebigen elektrisch leitenden Substraten, insbesondere aber zum Beschichten von Metallen, wie Stahl, Aluminium, Kupfer und dergleichen eingesetzt werden.

Die Erfindung wird in den folgenden Beispielen näher erläutert. Alle Angaben über Teile und Prozentsätze sind Gewichtsangaben, falls nicht ausdrücklich etwas anderes festgestellt wird.

1. Herstellung von wäßrigen Dispersionen, die das kationische aminmodifizierte Epoxidharz gemäß Oberbegriff des Patentanspruchs 1 und ein Vernetzungsmittel enthalten.

1.1 Herstellung des aminmodifizierten Epoxidharzes

In einem Reaktionsgefäß werden 1780 g Epikote 1001[1], 280 g Dodecylphenol und 105 g Xylol vorgelegt und unter Stickstoffatomosphäre bei 120 °C aufgeschmolzen. Anschließend werden unter leichtem Vakuum Wasserspuren durch Auskreisen entfernt. Dann gibt man 3 g N,N-Dimethylbenzylamin zu, erwärmt die Reaktionsmischung auf 130 °C und hält diese Temperatur für ca. 3 h, bis das Epoxidäquivalentgewicht (EEW) auf 1162 angestiegen ist. Sodann kühlt man und gibt in rascher Abfolge 131 g Hexylglykol, 131 g Diethanolamin und 241 g Xylol zu. Dabei steigt die Temperatur leicht an. Danach läßt man das Reaktionsgemisch auf 90 °C abkühlen und gibt zur weiteren Verdünnung 183 g Butylglykol und 293 g Isobutanol zu. Wenn die Temperatur auf 70 °C gefallen ist, gibt man 41 g N,N-Dimethylaminopropylamin zu, hält diese Temperatur für 3 h und trägt aus.

Das Harz hat einen Festgehalt von 70,2 % und einen Basengehalt von 0,97 Milliäquivalenten/Gramm.

1.2 Herstellung eines Vernetzungsmittels

In einem Reaktionsgefäß werden unter Stickstoffatmosphäre 1.129 g Toluylendiisocyanat (handelsübliches Isomerengemisch aus 2,4- und 2,6-Isomer) zusammen mit 490 g Methylisobutylketon vorgelegt. Unter Rühren werden 0,6 g Dibutylzinndilaurat mit anschließend 290 g Trimethylolpropan in kleinen Portionen so zugegeben, daß bei äußerer Kühlung die Innentemperatur 50 °C nicht übersteigt (Dauer ca. 2 h). Der Ansatz wird unter Kühlung noch so lange nachgerührt, bis das NCO-Äquivalentgewicht den Wert 215 erreicht hat. Dann läßt man 675 g Ethylenglykolmonopropylether in einer solchen Geschwindigkeit zutropfen, daß die Innentemperatur nicht über 100 °C steigt. man hält die Temperatur anschließend noch 1 Std. bei 100 °C, verdünnt mit 362 g Methylisobutylketon und 10 g n-Butanol und trägt anschließend nach kurzer Kühlung aus. Das Harz hat einen Festkörpergehalt von 71,8 % (1 h bei 130 °C) und eine Viskosität von 1,5 dPas (50%ige Lösung in Methylisobutylketon, gemessen am Platte-Kegel-Viskosimeter).

1.3 Herstellung der wäßrigen Dispersionen

1.3.1 Dispersion (I)

915 g Harz gemäß Pkt. 1.1 und 493 g Vernetzer gemäß Pkt. 1.2 und 134 g eines Polyoxypropylendiamins mit der Formel

$H_2N-CH(CH_3)-CH_2-(-OCH_2-CH(CH_3))-NH_2$

x = 33,1 (Jeffamine®D 2000, Handelsprodukt der Firma Texaco Chemical Company)
werden bei Raumtemperatur gemischt und gerührt. Sobald die Lösung homogen geworden ist, werden 2,2 g einer Entschäumerlösung[1] und 22 g Eisessig eingerührt und 674 g entionisiertes Wasser über 6 Portionen verteilt zugegeben. Anschließend wird mit weiteren 960 g entionisiertem Wasser in kleinen Portionen verdünnt.

Die resultierende wässrige Dispersion wird in einer Vakuumdestilation von niedrigsiedenden Lösemitteln befreit und anschließend mit entionisiertem Wasser auf einen Festkörper von 33 % verdünnt.

1.3.2 Dispersion (II)

Es wird wie unter Pkt. 1.3.1 verfahren, mit dem Unterschied, daß anstelle von 134 g Polyoxypropylendiamin 67 g Polyoxypropylendiamin eingesetzt werden.

1.3.3 Dispersion (III)

Es wird wie unter Pkt. 1.3.1 verfahren, mit dem Unterschied, daß kein Polyoxypropylendiamin eingesetzt wird. Zur Einstellung des Festkörpers von 33 % wird nach der Vakuumdestillation entsprechend weniger entionisiertes Wasser zugegeben.

[1] Epoxidharz der Fa. Shell mit einem Epoxidäquivalentgewicht von 500.

[1] Surfynol (Handelsprodukt der Air Chemicals), 50%ige Lösung in Ethylenglykolmonobutylether

2. Herstellung einer Pigmentpaste

2.1 Herstellung eines Reibharzes gemäß DE-OS-34 22 457

640 Teile eines Diglycidylethers auf Basis von Bisphenol A und Epichlorhydrin mit einem Epoxid-Äquivalentgewicht von 485 und 160 Teile eines solchen mit einem Epoxid-Äquivalentgewicht von 189 werden bei 100 °C gemischt. In einem weiteren Gefäß werden 452 Teile Hexamethylendiamin vorgelegt, auf 100 °C erhitzt und 720 Teile der obigen heißen Epoxidharzmischung innerhalb einer Stunde zugegeben, wobei leicht gekühlt werden muß, um die Temperatur bei 100 °C zu halten. Nach weiteren 30 min wird unter Temperaturerhöhung und vermindertem Druck das überschüssige Hexamethylendiamin abgezogen, wobei zum Schluß eine Temperatur von 205 °C und ein Druck von 30 mbar erreicht wird. Anschließend werden 57,6 Teile Stearinsäure, 172,7 Teile Dimerfettsäure und 115 Teile Xylol zugesetzt. Dann wird innerhalb von 90 min. bei 175 bis 180 °C das gebildete Wasser azeotrop abdestilliert. Anschließend werden 58 Teile Butylglykol und 322 Teile Isobutanol zugefügt. Das Produkt hat einen Feststoffgehalt von 70 % und eine Viskosität, gemessen bei 75 °C mit einem Platten-Kegel-Viskosimeter, von 2240 mPas.

2.2 Herstellung der Pigmentpaste

586 Teile des Reibharzes werden mit 1162 Teilen entionisiertem Wasser und 22 Teilen Eisessig intensiv vermischt. Anschließend wird mit 880 Teilen $TiO_2$, 250 Teilen eines Extenders auf Basis Aluminiumsilikat, 53 Teilen Bleisilikat und 10 Teilen Ruß vermengt. Diese Mischung wird in einem Mahlaggregat auf eine Hegman-Feinheit von kleiner 12 µm zerkleinert. Danach gibt man entionisiertes Wasser zu, um die gewünschte Pastenkonsistenz zu erreichen.

3. Zubereitung erfindungsgemäßer Elektrotauchlackbäder und Abscheidungen

2200 Gewichtsteile der Dispersionen gemäß Pkt. 1.3 werden mit 700 Teilen der Pigmentpaste gemäß Pkt. 2.2 versetzt und mit entionisiertem Wasser auf einen Badfestkörper von 20 Gew.-% eingestellt. Die Abscheidung der Lackfilme erfolgt während 2 min bei 300 V auf phosphatiertem Blech. Die Badtemperatur beträgt 27 °C. Die Filme werden bei 165 °C 20 min eingebrannt.

| | |
|---|---|
| Elektrotauchlackbad 1: | Dispersion gemäß Pkt. 1.3.1 mit Paste gemäß Pkt. 2.2 Polyoxypropylendiamingehalt (bezogen auf Gesamtmenge an Bindemitteln): 11,9 Gew.-% |
| Elektrotauchlackbad 2: | Dispersion gemäß Pkt. 1.3.2 mit Paste gemäß Pkt. 2.2 Polyoxypropylendiamingehalt (bezogen auf Gesamtmenge an Bindemitteln): 6,0 Gew.-% |
| Elektrotauchlackbad 3: | Dispersion gemäß Pkt. 1.3.3 mit Paste gemäß Pkt. 2.2 Polyoxypropylendiamingehalt: 0 Gew.-% |

Abscheideergebnisse

| Elektrotauchlackbad | 1 | 2 | 3 |
|---|---|---|---|
| Schichtdicke (µm) | 27 | 20 | 16 |
| Verlauf 1) | 1,5 | 2,5 | 1,5 |
| Krater/$dm^2$ | 1 | 20 | 10 |

1) Note 0 bis 5 (gut - schlecht)

Diese Filme wurden nun mit einem handelsüblichen Wasserfüller und einem weißen Alkyddecklack überlackiert und 240 h im Schwitzwasser-Konstant-Klima getestet. Danach wurde die Haftung der Filme mittels Gitterschnitt und Tesaabriß geprüft.

| Elektrotauchlackbad | 1 | 2 | 3 |
|---|---|---|---|
| Haftung 1) | 0,5 | 0,5 | 0,5 |

1) Note 0 bis 5 (gut - schlecht)

## Patentansprüche

1. Verfahren zur Beschichtung elektrisch leitfähiger Substrate, bei dem

   (1) das Substrat in ein wäßriges Elektrotauchlackbad eingetaucht wird, wobei das wäßrige Elektrotauchlackbad ein kationisches aminmodifiziertes Epoxidharz enthält, das erhältlich ist durch Umsetzung von
   (A) einer Diepoxidverbindung mit einem Epoxidäquivalentgewicht unter 2000
   (B) einer gegenüber Epoxidgruppen monofunktionell reagierenden Verbindung, die eine alkoholische OH-Gruppe, eine phenolische OH-Gruppe oder eine SH-Gruppe trägt und
   (C) einem Amin,
   wobei die Komponenten (A) und (B) in einem Molverhältnis von 10:1 bis 1:1, vorzugsweise 4:1 bis 1,5:1, eingesetzt werden und die positiven Ladungen durch Protonierung des Reaktionsproduktes und/oder Verwendung von Aminsalzen als (C)-Komponente eingeführt werden
   (2) das Substrat als Kathode geschaltet wird,
   (3) durch Gleichstrom ein Film auf dem Substrat abgeschieden wird,
   (4) das Substrat aus dem Elektrotauchlackbad entfernt wird und
   (5) der abgeschiedene Lackfilm eingebrannt wird,

   dadurch gekennzeichnet, daß das Elektrotauchlackbad mindestens 7,5 Gew.-% eines Polyoxyalkylenpolyamins oder eines Gemisches aus mehreren Polyoxyalkylenpolyaminen mit unterschiedlichen chemischen Strukturen enthält, wobei sich die Gew.-% Angabe auf die im Elektrotauchlackbad enthaltene Gesamtmenge an Bindemitteln bezieht.

2. Verfahren nach Anspruch 1, dadurch gekennzeichnet, daß das Elektrotauchlackbad ein blockiertes Polyisocyanat als Vernetzungsmittel enthält.

3. Verfahren nach Anspruch 1 oder 2, dadurch gekennzeichnet, daß das Elektrotauchlackbad ein Polyoxyalkylenpolyamin der allgemeinen Formel (I)

   $$H_2N\text{-}CHR\text{-}CH_2\text{-}O\text{-}(\text{-}CHR\text{-}CH_2\text{-}O\text{-})_n\text{-}CH_2\text{-}CHR\text{-}NH_2 \qquad (I)$$

   enthält, wobei bedeuten

   R = H oder Alkylrest mit 1 bis 6 C-Atomen, vorzugsweise $-CH_3$
   n = 5 bis 60, vorzugsweise 20 bis 40

4. Substrat, beschichtet nach einem Verfahren gemäß einem der Ansprüche 1 bis 3.

5. Wäßrige Elektrotauchlackbäder, die ein kationisches aminmodifiziertes Epoxidharz enthalten, das erhältlich ist durch Umsetzung von

   (A) einer Diepoxidverbindung mit einem Epoxidäquivalentgewicht unter 2000
   (B) einer gegenüber Epoxidgruppen monofunktionell reagierenden Verbindung, die eine alkoholische OH-Gruppe, eine phenolische OH-Gruppe oder eine SH-Gruppe trägt und
   (C) einem Amin,
   wobei die Komponenten (A) und (B) in einem Molverhältnis von 10:1 bis 1:1, vorzugsweise 4:1 bis 1,5:1, eingesetzt werden und die positiven Ladungen durch Protonierung des Reaktionsproduktes und/oder Verwendung von Aminsalzen als (C)-Komponente eingeführt werden, dadurch gekennzeichnet, daß sie mindestens 7,5 Gew.-% eines Polyoxyalkylenpolyamins oder eines Gemisches aus mehreren Polyoxyalkylenpolyaminen mit unterschiedlichen chemischen Strukturen enthalten, wobei sich die Gew.-%-Angabe auf die im Elektrotauchlackbad enthaltene Gesamtmenge an Bindemitteln bezieht.

6. Elektrotauchlackbäder nach anspruch 5, dadurch gekennzeichnet, daß sie ein blockiertes Polyisocyanat als Vernetzungsmittel enthalten.

7. Elektrotauchlackbäder nach Anspruch 5 oder 6, dadurch gekennzeichnet, daß sie ein Polyoxyalkylenpolyamin der allgemeinen Formel (I)

$H_2N-CHR-CH_2-O-(-CHR-CH_2-O-)_n-CH_2-CHR-NH_2$ (I)

enthalten, wobei bedeuten

R = H oder Alkylrest mit 1 bis 6 C-Atomen, vorzugsweise $-CH_3$
n = 5 bis 60, vorzugsweise 20 bis 40.

**Claims**

1. A process for coating electrically conducting substrates, in which process
(1) the substrate is immersed in an aqueous electrocoating bath which contains a cationic amine-modified epoxy resin obtainable by reacting
(A) a diepoxy compound of an epoxide equivalent weight below 2000
(B) a compound monofunctionally reactive toward the epoxide groups and containing an alcoholic OH group, a phenolic OH group or an SH group, and
(C) an amine,
the components (A) and (B) being used in a molar ratio of 10:1 to 1:1, preferably 4:1 to 1.5:1 and the positive charges being introduced by protonization of the reaction product and/or by use of amine salts as the component (C);
(2) the substrate is connected as cathode,
(3) a film is deposited on the substrate by the action of direct current,
(4) the substrate is removed from the electrocoating bath and
(5) the deposited paint film is baked,

wherein the electrocoating bath contains at least 7.5 % by weight of a polyoxyalkylenepolyamine or a mixture consisting of several polyoxyalkylenepolyamines of different chemical structures, the percentage by weight referring to the total amount of binders contained in the electrocoating bath.

2. The process as claimed in claim 1, wherein the electrocoating bath contains a blocked polyisocyanate as crosslinking agent.

3. The process as claimed in claims 1 or 2, wherein the electrocoating bath contains a polyoxyalkylenepolyamine of the general formula (I)

$H_2N-CHR-CH_2-O-(-CHR-CH_2-O-)_n-CH_2-CHR-NH_2$ (I)

in which
R denotes H or an alkyl radical of 1 to 6 carbon atoms, preferably $-CH_3$
n denotes 5 to 60, preferably 20 to 40

4. A substrate coated by a process as claimed in any one of the claims 1 to 3.

5. Aqueous electrocoating baths which contain a cationic amine-modified epoxy resin obtainable by reacting
(A) a diepoxy compound of an epoxide equivalent weight below 2000.
(B) a compound monofunctionally reactive toward the epoxide groups and containing an alcoholic OH group, a phenolic OH group or an SH group, and
(C) an amine,

the components (A) and (B) being used in a molar ratio of 10:1 to 1:1, preferably 4:1 to 1.5:1 and the positive charges being introduced by protonization of the reaction product and/or by use of amine salts as the component (C), wherein the electrocoating baths contain at least 7.5 % by weight of a polyoxyalkylenepolyamine or a mixture consisting of several polyoxyalkylenepolyamines of different chemical structures, the percentage by weight referring to the total amount of binders contained in the electrocoating bath.

6. Electrocoating baths as claimed in claim 5, wherein they contain a blocked polyisocyanate as

crosslinking agent.

**7.** Electrocoating baths as claimed in claim 5 or 6, wherein they contain a polyoxyalkylenepolyamine of the general formula (I)

$H_2N\text{-}CHR\text{-}CH_2\text{-}O\text{-}(\text{-}CHR\text{-}CH_2\text{-}O\text{-})_n\text{-}CH_2\text{-}CHR\text{-}NH_2$ (I)

in which
R denotes H or an alkyl radical of 1 to 6 carbon atoms, preferably $-CH_3$
n denotes 5 to 60, preferably 20 to 40.

**Revendications**

**1.** Procédé de revêtement de substrats conducteurs de l'électricité, suivant lequel :
(1) le substrat est plongé dans un bain aqueux de laquage d'électrodéposition, le bain aqueux de laquage d'électrodéposition contenant une résine époxydique cationique, modifiée par une amine, qui a été obtenue par réaction de :
(A) un composé diépoxydique ayant un poids équivalent en époxyde inférieur à 2000 ;
(B) un composé réagissant de façon monofonctionnelle vis-à-vis des groupes époxyde, qui porte un groupe OH alcoolique, un groupe OH phénolique ou un groupe SH ; et
(C) une amine,
les composants (A) et (B) étant utilisés dans un rapport molaire de 10:1 à 1:1, de préférence, de 4:1 à 1,5:1, et les charges positives étant introduites par protonation du produit de réaction et/ou utilisation de sels d'amines en tant que composant (C) ;
(2) le substrat est monté en cathode ;
(3) un film est déposé sur le substrat par application de courant continu ;
(4) le substrat est retiré du bain de laquage d'électrodéposition ; et
(5) le film de laque déposé est soumis à une cuisson,
caractérisé par le fait que le bain de laque d'électrodéposition contient au moins 7,5% en poids d'une polyoxyalkylènepolyamine ou d'un mélange de plusieurs polyoxyalkylènepolyamines ayant des structures chimiques différentes, la donnée en % en poids se rapportant à la quantité totale de liants contenue dans le bain de laquage d'électrodéposition.

**2.** Procédé selon la revendication 1, caractérisé par le fait que le bain de laquage d'électrodéposition contient un polyisocyanate bloqué comme agent de réticulation.

**3.** Procédé selon l'une des revendications 1 ou 2, caractérisé par le fait que le bain de laquage d'électrodéposition contient une polyoxyalkylènepolyamine de la formule générale (I) :

$H_2N\text{-}CHR\text{-}CH_2\text{-}O\text{-}(\text{-}CHR\text{-}CH_2\text{-}O\text{-})_n\text{-}CH_2CHR\text{-}NH_2$ (I)

dans laquelle :
- R = H ou reste alkyle ayant 1 à 6 atomes de C, de préférence, $-CH_3$ ;
- n = 5 à 60, de préférence 20 à 40.

**4.** Substrat revêtu par un procédé tel que défini à l'une des revendications 1 à 3.

**5.** Bains aqueux de laquage d'électrodéposition, qui contiennent une résine époxydique cationique, modifiée par une amine, qui peut être obtenue par réaction de :
(A) un composé diépoxydique ayant un poids équivalent en époxyde inférieur à 2000 ;
(B) un composé réagissant de façon monofonctionnelle vis-à-vis des groupes époxyde, qui porte un groupe OH alcoolique, un groupe OH phénolique ou un groupe SH ; et
(C) une amine,
les composants (A) et (B) étant utilisés dans un rapport molaire de 10:1 à 1:1, de préférence, de 4:1 à 1,5:1, et les charges positives étant introduites par protonation du produit de réaction et/ou utilisation de sels d'amines en tant que composant (C),
caractérisés par le fait qu'ils contiennent au moins 7,5% en poids d'une polyoxyalkylènepolyamine ou d'un mélange de plusieurs polyoxyalkylènepolyamines ayant des structures chimiques différentes, la

donnée en pourcentage en poids se rapportant à la quantité totale de liants contenue dans le bain de laquage d'électrodéposition.

**6.** Bains de laquage d'électrodéposition selon la revendication 5, caractérisés par le fait qu'ils contiennent un polyisocyanate bloqué comme agent de réticulation.

**7.** Bains de laquage d'électrodéposition selon l'une des revendications 5 et 6, caractérisés par le fait qu'ils contiennent une polyoxyalkylènepolyamine de la formule générale (I) :

$H_2N-CHR-CH_2-O-(-CHR-CH_2-O-)_n-CH_2-CHR-NH_2$ (I)

dans laquelle :

- R = H ou reste alkyle ayant 1 à 6 atomes de C, de préférence $-CH_3$
- n = 5 à 60, de préférence 20 à 40.